# EUROPÄISCHE PATENTSCHRIFT

(11) **EP 0 429 782 B1**
(45) Veröffentlichungstag und Bekanntmachung des Hinweises auf die Patenterteilung: **18.05.1994**
(21) Anmeldenummer: 90117369.0
(22) Anmeldetag: 10.09.1990
(51) Int. Cl.: B42D 15/02, B42D 15/00

(54) **Anordnung zur Verbesserung der Fälschungssicherheit eines Wertdokumentes**
Arrangement for improving the falsification safety of a document of value
Dispositif pour modifier la protection contre la falsification d'un document de valeur

(30) Priorität: 01.12.1989 CH 4310/89
(43) Veröffentlichungstag der Anmeldung: 05.06.1991
(73) Patentinhaber: Landis & Gyr Technology Innovation AG, 6301 Zug (CH)
(72) Erfinder: Gregor, Antes, CH-8816 Hirzel (CH)

(56) Entgegenhaltungen:
- EP-A- 0 093 009
- EP-A- 0 149 542
- EP-A- 0 251 253
- EP-A- 0 298 687
- EP-A- 0 312 479
- GB-A- 2 181 993
- GB-A- 2 209 995
- US-A- 4 715 623

## Beschreibung

Die Erfindung bezieht sich auf eine Anordnung zur Verbesserung der Fälschungssicherheit eines Wertdokumentes gemäss dem Oberbegriff des Anspruchs 1.

Solche Anordnungen eignen sich beispielsweises zum Schutz von Geldscheinen, Kreditkarten und andern wichtigen Wertdokumenten, deren Grundmaterial vorzugsweise aus Papier, Kunststoff oder einem andern prägbaren Material besteht.

Bekannt ist eine VISA-Kreditkarte, die durch ein aufgebrachtes Sicherheitsmerkmal in Gestalt eines Hologramms geschützt ist, wobei durch ein nachträgliches Einprägen eines groben Profils beidseitig eines Randes des Sicherheitsmerkmals ein sehr grober Schutz gegen ein Entfernen des Hologramms und ein anschliessendes unbemerktes Anbringen auf ein anderes, gefälschtes Wertdokument vorhanden ist. Das grobe Profil ist dabei teilweise in das Hologramm und teilweise in das Grundmaterial der Kreditkarte eingeprägt und besteht aus einer Zahl oder einem Buchstaben.

Auch ist die Druckschrift EP 0 251 253 A bekannt, in der ein Sicherheitsdokument, wie z. B. eine Kreditkarte, ein Reise- oder ein Sicherheits-Pass, beschrieben ist, welches ein flaches Trägermaterial aus Kunststoff, Papier oder Metall besitzt, auf dem ein reflektierendes oder lichttransmittierendes Hologramm aufgetragen ist. Das Hologramm ist mit einer Schutzschicht bedeckt und besteht aus einem zentralen eigentlichen Hologramm, welches von einem Rahmen umgeben ist. Entlang der Kanten des Hologramms sind Referenzmerkmale angeordnet, welche zusammen mit der Schutzschicht verhindern, dass das Hologramm nach seiner Entfernung vom Sicherheitsdokument z. B. zu Fälschungszwecken verwendet werden kann. Auf das Trägermaterial sind ausserdem noch an mindestens einer Stelle Kodeinformationen in Gestalt einer Schrift, optischer oder magnetischer Zeichen aufgetragen, die mindestens teilweise vom Hologramm bedeckt sein können. Die Umrahmung des eigentlichen Hologramms kann zwecks Makropositionierung und Identifizierung des Hologramms zwei Sätze Kennzeichen aufweisen, welche aus Beugungsgittern bestehen. Die letzteren können in einer Variante auch innerhalb des eigentlichen Hologramms angeordnet sein. In einer weiteren Variante ist die Oberfläche des Trägermaterials ganz oder teilweise mit einem eingeprägten sägezahnförmigen Sicherheitscode bedeckt, der gleiche Gestalt und Abmessung wie das Hologramm besitzt. Das letztere ist mit seiner gesamten unteren Fläche auf den eingeprägten Sicherheitscode aufliegend angeordnet. Der Sicherheitscode verändert den Reflexionswinkel oder die chromatische Lichtstreuung des Hologramms.

Ebenfalls ist die Druckschrift EP 0 093 009 A bekannt, in der ein Sicherheitsdokument, z. B. eine Banknote, beschrieben ist, welches über seine ganze Breite ein metallisches oder reflektierendes Sicherheitsband aufweist, das die Gestalt eines sich wiederholenden komplizierten Musters besitzt und überdruckt ist mit einem für die Banknote kennzeichnenden farbigen Muster, welches sowohl das Sicherheitsband als auch die angrenzende Fläche der Banknote bedeckt.

Der Erfindung liegt die Aufgabe zugrunde, eine Anordnung zu verwirklichen, die die Fälschungssicherheit von Wertdokumenten verbessert und zwar dergestalt, dass die Anordnung auch zum Schutz von Papiergeldscheinen verwendbar ist und Herstellungstechniken benötigt, die mindestens kompatibel sind mit den zur Geldscheinherstellung verwendeten Drucktechniken.

Die genannte Aufgabe wird erfindungsgemäss durch die im Kennzeichen des Anspruchs 1 angegebenen Merkmale gelöst.

Vorteilhafte Ausgestaltungen der Erfindung ergeben sich aus den Unteransprüchen.

Ausführungsbeispiele der Erfindung sind in der Zeichnung dargestellt und werden im folgenden näher beschrieben.

Es zeigen:
- Fig. 1: ein Wertdokument mit zwei Sicherheitsmerkmalen und einem Sicherheitsprofil,
- Fig. 2: einen Querschnitt durch eine erste Variante einer überlappenden Fläche eines Sicherheitsmerkmals und eines Sicherheitsprofils,
- Fig. 3: einen Querschnitt durch eine zweite Variante einer überlappenden Fläche eines Sicherheitsmerkmals und eines Sicherheitsprofils,
- Fig. 4: einen Querschnitt durch eine dritte Variante einer überlappenden Fläche eines Sicherheitsmerkmals und eines Sicherheitsprofils,
- Fig. 5: einen Querschnitt durch eine vierte Variante einer überlappenden Fläche eines Sicherheitsmerkmals und eines Sicherheitsprofils und
- Fig. 6: eine Draufsicht einer überlappenden Fläche eines Sicherheitsmerkmals und eines Sicherheitsprofils.

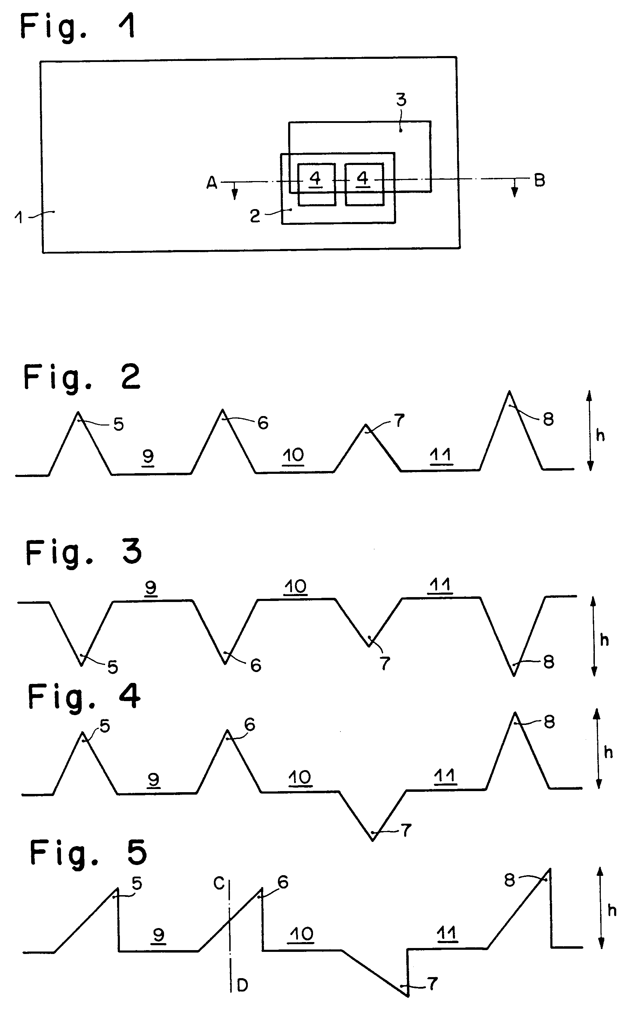

Gleiche Bezugszahlen bezeichnen in allen Figuren der Zeichnung gleiche Teile. Die in den Figuren 2-4 gezeigten Ansführungsformen sind in der hier gezeigten Version eines symmetrischen Profilquerschnitts nicht gegenstand der Ansprüche.

Die Anordnung zur Verbesserung der Fälschungssicherheit eines Wertdokumentes 1 besteht gemäss der Fig. 1 aus einer Folie 2 und einem Sicherheitsprofil 3, wobei die Folie 2 mit mindestens einem Sicherheitsmerkmal 4 versehen ist. In der Darstellung der Fig. 1 gilt z. B. die Annahme, dass zwei Sicherheitsmerkmale 4 vorhanden sind.

Die Folie 2 ist lokal begrenzt auf dem Wertdokument 1 aufgebracht und enthält eine Reflexionsschicht, die entweder durch eine Metallisierung wirksam ist oder durch eine Grenzschicht zwischen zwei Dielektrikumschichten, die unterschiedliche Licht-Brechzahlen aufweisen. Die Metallisierung ist dabei 5.10⁻⁹ Meter bis 100.10⁻⁹ Meter dick. Vorzugsweise wird eine Heissprägefolie oder eine Klebefolie als Folie 2 verwendet. Die Heissprägefolie mit den Sicherheitsmerkmalen 4 wird dabei mittels eines flachen Prägestempels auf das Wertdokument 1 aufgebracht. Die Folie 2 ist in diesem Fall 2 bis 3 Mikrometer und ihr Trägersubstrat vor der Montage annähernd 20 Mikrometer dick. Das Trägersubstrat der Heizprägefolie wird nach der Montage der Heissprägefolie auf das Wertdokument 1 z. B. durch Abziehen entfernt.

Die Sicherheitsmerkmale 4 bestehen jeweils aus einer beugungsoptisch wirksamen Mikrostruktur, wobei Mikrostrukturen solche Strukturen sind, die annähernd 300 bis 3000 Linien pro Millimeter aufweisen. Die in der Anordnung verwendeten Mikrostrukturen sind vorzugsweise Hologramme, unter dem Markennamen KINEGRAM bekannte beugungsoptische Elemente oder einfache Beugungsgitter. In den europäischen Patentanmeldungen 89107672.1 und 89107671.3 sind z. B. solche Mikrostrukturen beschrieben, die mit Vorteil in der erfindungsgemässen Anordnung verwendet werden können.

Das Sicherheitsprofil 3 wird nachträglich, nach der Montage der mit mindestens einem Sicherheitsmerkmal 4 versehenen Folie 2 auf das Wertdokument 1, so in das Wertdokument 1 eingeprägt, dass mindestens die Fläche eines der Sicherheitsmerkmale 4 teilweise einen Teil des Sicherheitsprofils 3 aufweist. Einen Querschnitt durch diesen überlappenden gemeinsamen Teil der Fläche des Sicherheitsmerkmals 4 und des Sicherheitsprofils 3 entlang einer Schnittebene AB (siehe Fig. 1) ist für vier Varianten in den Figuren 2 bis 5 dargestellt.

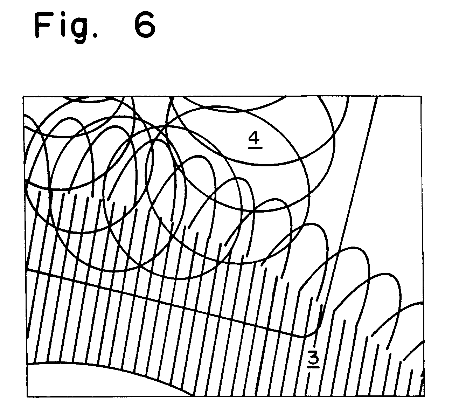

Das Sicherheitsprofil 3 besteht einerseits aus einer Anzahl vertiefter und/oder erhabener Relieflinien und anderseits aus dazwischen liegenden annähernd parallel zur Oberfläche des Wertdokumentes 1 verlaufenden flachen Zwischenräumen. Das Sicherheitsprofil 3 ist in der Regel ein Makroprofil, d. h. es enthält annähernd höchstens 10 Linien pro Millimeter. Die Tiefe h (siehe Fig. 2 bis Fig. 5) der Sicherheitsprofile ist grösser als 20 Mikrometer und kleiner als 0,5 Millimeter. In den Figuren 2 bis 5 sind aus Gründen der zeichnerischen Einfachheit jeweils nur vier Relieflinien 5 bis 8 und drei Zwischenräume 9 bis 11 dargestellt. Die in der Fig. 2 dargestellte erste Variante besitzt vier erhabene Relieflinien 5 bis 8, die in der Fig. 3 wiedergegebene zweite Variante vier vertiefte Relieflinien 5 bis 8 und die in den Figuren 4 und 5 dargestellten dritte und vierte Variante je drei erhabene Relieflinien 5, 6 und 8 sowie je eine vertiefte Relieflinie 7. Die relative Anzahl erhabener und vertiefter Relieflinien 5 bis 8 ist dabei an sich beliebig. Mindestens ein Teil der Flanken der Relieflinien 5 bis 8 und der Oberflächen der Zwischenräume 9 bis 11 des Sicherheitsprofils 3 sind mit einem Teil des zugehörigen Sicherheitsmerkmals 4 bedeckt. Das Sicherheitsmerkmal 4 ist in den Figuren 2 bis 5 einfachshalber nicht dargestellt. Die erhabenen Profile der Relief linien 5 bis 8 in der Darstellung der Fig. 2 und 5, 6 und 8 in den Darstellungen der Figuren 4 und 5 haben den Vorteil, dass durch sie die Abnützungsresistenz der die Zwischenräume 9 bis 11 bedeckenden Teile der Mikrostrukturen der Sicherheitsmerkmale 4 erhöht wird, indem sie als Abstandshalter die tieferliegenden flachen Täler der Zwischenräume 9 bis 11 und die dort vorhandenen Teile der Mikrostrukturen gegen Abrasion schützen.

Das Sicherheitsprofil 3 wird mittels eines bei der Herstellung von Geldscheinen üblichen Druckverfahrens hergestellt und ist vorzugsweise Gegenstand eines nichtfarbführenden Druckverfahrens oder eines mindestens teilweise farbführenden Druckverfahrens. Die Verwendung eines farbführenden Druckes, der übriges auch farblos mit einer transparenten Farbe ausgeführt werden kann, hat den Vorteil, dass gewisse spezielle Schutzmassnahmen, die zur Erzeugung eines Blinddrucks im Druckverfahren erforderlich sind, vermieden werden können. Ausserdem ist ein farbführendes Sicherheitsprofil 3 wegen den notwendigen vorhandenen Farbtönen schwieriger zu fälschen als eine Blindprägung. Das Druckverfahren ist vorzugsweise ein "Intaglio"-, auch Kupferdruck- oder Stahlstichdruck-Verfahren genanntes Druckverfahren. Die Reliefprägung des Sicherheitsprofils 3 in das Wertdokument 1 und/oder in die Folie 2 erfolgt z. B. mittels eines profilierten Stempels simultan mit dem Transfer des Sicherheitsmerkmals 4 auf das Wertdokument 1.

Da die Zwischenräume 9 bis 11 und die sie bedeckende Teile des Sicherheitsmerkmal 4 parallel zur Oberfläche des Wertdokuments 1 verlaufen, werden in diesen Teilen des Sicherheitsmerkmals 4 und des Sicherheitsprofils 3 die Richtungen der an den Mikrostrukturen des Sicherheitsmerkmals 4 gebeugten Lichtstrahlen die gleichen bleiben wie vor der Bedruckung des Wertdokumentes 1 mit dem Sicherheitsprofil 3 und wird somit die Sichtbarkeit der Mikrostruktur in diesen Teilen des Sicherheitsprofils 3 nicht beeinträchtigt.

Die räumliche Gestalt der Relieflinien 5 bis 8 des Sicherheitsprofils 3 ist an sich beliebig. In den Figuren 2 bis 5 wurde nur aus Gründen der zeichnerischen Einfachheit das Vorhandensein von solchen Sicherheitsprofilen 3 angenommen die einen dreieckförmigen Querschnitt besitzen. Die Profile der Relieflinien 5 bis 8 weisen jedoch alle mindestens teilweise so starke Wölbungen auf, dass am mit Licht bestrahlten Sicherheitsprofil 3 Glanzeffekte von Lichtreflexionen dominierend sichtbar sind und beim Ablösen eines Sicherheitsmerkmals 4 vom Wertdokument 1 mit Sicherheit einerseits sollbruchstellen für das betreffende Sicherheitsmerkmal 4 enstehen und anderseits die die Zwischenräume 9 bis 11 bedeckenden Teile des Sicherheitsmerkmals 4 so stark deformiert werden, dass die Deformationen des Sicherheitsmerkmals 4 beim Aufbringen des abgelösten Sicherheitsmerkmals 4 auf ein anderes Wertdokument leicht erkennbar sind.

In bevorzugt verwendeten Ausführungsvarianten der Erfindung ist das Sicherheitsprofil 3 auf dem Wertdokument 1 nahtlos über den Rand der Folie 2 hinausgehend und/oder auf der Folie 2 nahtlos über den Rand mindestens eines der Sicherheitsmerkmale 4 hinausgehend eingeprägt (siehe Fig. 1). Ziel dieses Verfahrens ist dabei das Verhindern des Ausschneidens der mikrostrukturtragenden Metallschicht 2 oder der Mikrostruktur eines Sicherheitsmerkmals 4 aus dem Wertdokument 1 und deren unbemerkte Montage auf ein anderes Wertdokument.

Die in der Mikrostruktur der Sicherheitsmerkmale 4 enthaltenen, in der Zeichnung nicht dargestellten Linien und die Relieflinien 5 bis 8 des Sicherheitsprofils 3 sind, zur Erzielung eines bestimmten graphishen Effektes, der nur mit erhöhter Positionierungs-Genauigkeit herstellbar ist und somit die Fälschungssicherheit verbessert, vorzugsweise graphisch so aufeinander abgestimmt und räumlich so zueinander angeordnet, dass bei Fälschungsversuchen kleine Abweichungen sofort erkennbar sind. Sie sind dabei vorzugsweise so ausgebildet, dass beugungsoptisch wirksam werdende Talsohlen der Mikrostruktur des Sicherheitsmerkmals 4 unmittelbar neben den als Berge wirksam werdenden Teilen des Sicherheitsprofils 3 vorhanden sind oder Moiré-Effekte erzeugt und sicherheitstechnisch ausgenutzt werden.

Mindestens ein Teil der Relieflinien 5 bis 8 des Sicherheitsprofils 3 ist mit solchen Querschnittsprofilen versehen, die der Erzielung spezieller Reflexionscharakteristiken dienen, wobei die speziellen Reflexionscharakteristiken Träger codierter oder uncodierter optischer Informationen sind. Zur Erzeugung der speziellen Reflexionscharakteristiken sind die Relieflinien 5 bis 8 dabei, wie in der Fig. 5 dargestellt, in asymmetrisch zu einer senkrecht zur Oberfläche des Wertdokumentes 1 verlaufenden Geraden CD ausgebildet. Die in der Fig. 5 dargestellten Querschnitte haben die Gestalt von Sägezähnen, deren eine jede Kante jeweils asymmetrisch zur Geraden CD verläuft.

In der erfindungsgemässen Anordnung werden die beugungsoptischen Effekte der Mikrostrukturen 4 so verkettet mit den Reflexionseffekten an den durch die metallischen Reliefwölbungen des Sicherheitsprofils 3 gebildeten Makroprofilstrukturen, dass eine ganzflächige Trennung einer intakten mikrostrukturtragenden Folie 2 vom Wertdokument 1 und ihr Wiederaufbringen auf ein anderes Wertdokument praktisch verunmöglicht wird durch die erwähnten Sollbruchstellen und Deformationen des betreffenden Sicherheitsmerkmals 4. Es wäre zudem mit extremen Schwierigkeiten verbunden, wieder im neuen Wertdokument ein dem ursprünglichen Makroprofil entsprechendes Sicherheitsprofil 3 zur Verdeckung der Fehlstellen deckungsgleich aufzubringen.

Die erfindungsgemässe Anordnung hat ausserdem den Vorteil, dass sie nicht nur visuell, sondern auch maschinell sicherheitstechnisch einfach ausgewertet werden kann, da die Reflexionscharakteristik, d. h. der Zylinderlinseneffekt, des Sicherheitsprofils 3 wellenlängenunabhängig ist, während die optischen Effekte der lichtstreuenden Mikrostrukturen der Sicherheitsmerkmale 4 wellenlängenabhängig sind und somit leicht unterschieden werden können vom Vorhandensein ganz bestimmter Relieflinien des Sicherheitsprofils 3.

## Patentansprüche

1. Anordnung zur Verbesserung der Fälschungssicherheit eines Wertdokumentes (1),
- auf dem lokal begrenzt eine Folie (2) aufgebracht ist, welche mit mindestens einem aus einer beugungsoptisch wirksamen Mikrostruktur bestehenden Sicherheitsmerkmal (4) versehen ist,
- wobei mindestens ein Teil der Fläche des Wertdokumentes (1) ein eingeprägtes Sicherheitsprofil (3) aufweist, welches Relieflinien (5 bis 8) besitzt und so angeordnet ist, dass es mindestens einen Teil der Fläche des Sicherheitsmerkmales (4) überlappt, wobei das Sicherheitsprofil (3) mit seinem überlappenden Teil in das Sicherheitsmerkmal (4) eingeprägt ist und wobei die Relieflinien (5 bis 8) gewölbte Profile besitzen, die unter Lichtstrahlen Glanzeffekte von Lichtreflexionen verursachen,
dadurch gekennzeichnet, dass
zur Erzeugung von Reflexionscharakteristiken die Relieflinien (5 bis 8) in ihrem Querschnittsprofil asymmetrisch zu einer senkrecht zur Oberfläche des Wertdokumentes (1) verlaufenden Geraden (CD) ausgebildet sind.

2. Anordnung nach Anspruch 1, dadurch gekennzeichnet, dass dank der gewölbten Profile beim Ablösen des Sicherheitsmerkmals (4) vom wertdokument (1) Sollbruchstellen des Sicherheitsmerkmals (4) enstehen sowie die die Zwischenräume (9 bis 11) bedeckenden Teile des Sicherheitsmerkmals (4) deformiert werden und beim Aufbringen des abgelösten Sicherheitsmerkmals (4) auf ein anderes Wertdokument Deformationen des Sicherheitsmerkmals (4) erkennbar sind.

3. Anordnung nach Anspruch 1 oder 2, dadurch gekennzeichnet, dass das Sicherheitsprofil (3) auf dem Wertdokument (1) nahtlos mindestens über den Rand der Folie (2) hinausgehend eingeprägt ist.

4. Anordnung nach einem der Ansprüche 1 bis 3, dadurch gekennzeichnet, dass das Sicherheitsprofil (3) auf der Folie (2) nahtlos über den Rand mindestens eines der Sicherheitsmerkmale (4) hinausgehend eingeprägt ist.

5. Anordnung nach einem der Ansprüche 1 bis 4, dadurch gekennzeichnet, dass das Sicherheitsprofil (3) vertiefte Relieflinien aufweist.

6. Anordnung nach einem der Ansprüche 1 bis 5, dadurch gekennzeichnet, dass das Sicherheitsprofil (3) erhabene Relieflinien aufweist.

7. Anordnung nach einem der Ansprüche 1 bis 6, dadurch gekennzeichnet, dass beugungsoptisch wirksam werdende Talsohlen der Mikrostruktur des Sicherheitsmerkmals (4) unmittelbar neben als Berge wirksam werdende Teile des Sicherheitsprofils (3) vorhanden sind.

8. Anordnung nach einem der Ansprüche 1 bis 7, dadurch gekennzeichnet, dass das Sicherheitsprofil (3) ein nichtfarbführender Druck ist.

9. Anordnung nach einem der Ansprüche 1 bis 7, dadurch gekennzeichnet, dass das Sicherheitsprofil (3) mindestens teilweise ein farbführender Druck ist.

## Claims

1. An arrangement for improving the anti-forgery security of a value document (1)
- on which a foil (2) is locally limitedly applied, which foil is provided with at least one security feature (4) comprising a microstructure having a diffraction-optical effect,
- wherein at least a part of the surface of the value document (1) has an embossed security profile (3) which has relief lines (5 to 8) and which is so arranged that it overlaps at least a part of the surface of the security feature (4), wherein the security profile (3) is embossed with its overlapping part into the security feature (4) and wherein the relief lines (5 to 8) have curved profiles which under light beams cause shine effects by light reflection phenomena,
characterised in that
to produce reflection characteristics the relief lines (5 to 8) are formed in respect of their cross-sectional profile assymmetrically relative to a straight line (CD) extending perpendicularly to the surface of the value document (1).

2. An arrangement according to claim 1 characterised in that by virtue of the curved profiles when the security feature (4) is detached from the value document (1) desired-rupture locations of the security feature (4) are produced and the parts of the security feature (4), which cover the intermediate spaces (9 to 11) are deformed and when the detached security feature (4) is applied to another value document deformations of the security feature (4) are discernible.

3. An arrangement according to claim 1 or claim 2 characterised in that the security profile (3) is embossed on the value document (1) extending imperceptibly at least over the edge of the foil (2).

4. An arrangement according to one of claims 1 to 3 characterised in that the security profile (3) is embossed on the foil (2) extending imperceptibly over the edge of at least one of the security features (4).

5. An arrangement according to one of claims 1 to 4 characterised in that the security profile (3) has indented relief lines.

6. An arrangement according to one of claims 1 to 5 characterised in that the security profile (3) has raised relief lines.

7. An arrangement according to one of claims 1 to 6 characterised in that valley bottoms of the microstructure of the security feature (4), which valley bottoms produce a diffraction-optical effect, are disposed immediately beside parts of the security profile (3), which become effective as microstructure peaks.

8. An arrangement according to one of claims 1 to 7 characterised in that the security profile (3) is a non-ink-bearing impression.

9. An arrangement according to one of claims 1 to 7 characterised in that the security profile (3) is at least partially an ink-bearing impression.

## Revendications

1. Dispositif pour améliorer la sécurité d'un document de valeur (1),
- sur lequel est disposé, d'une manière limitée localement une feuille (2), qui comporte au moins une caractéristique de sécurité (4) constituée par une microstructure active dans l'optique de diffraction,
- et dans lequel au moins une partie de la surface du document de valeur (1) possède un profil de sécurité gaufré (3), qui possède des lignes de gaufrage (5 à 8) et est disposé de telle sorte qu'il recouvre au moins une partie de la surface de la caractéristique de sécurité (4), le profil de sécurité (3) étant inséré par gaufrage, par sa partie en chevauchement, dans la caractéristique de sécurité (4), tandis que les lignes de gaufrage (5 à 8) possèdent des profils cintrés, qui provoquent, sous l'action de rayons lumineux, des effets brillants de réflexions de lumière,
caractérisé en ce que
pour la production de caractéristiques de réflexion, les lignes de gaufrage (5 à 8) sont agencées avec un profil en coupe transversale, qui est dissymétrique par rapport à une droite (CD) perpendiculaire à la surface du document de valeur (1).

2. Dispositif selon la revendication 1, caractérisé en ce que grâce au profil cintré, lors du détachement de la caractéristique de sécurité (4) à partir du document de valeur (1), des points de rupture de consigne de la caractéristique de sécurité (4) apparaissent et les parties, qui recouvrent les espaces intercalaires (9 à 11), de la caractéristique de sécurité (4) sont déformées et, lors de l'application de la caractéristique de sécurité (4) détachée sur un autre document de valeur, des déformations de la caractéristique de sécurité (4) sont identifiables.

3. Dispositif selon la revendication 1 ou 2, caractérisé en ce que le profil de sécurité (3) est appliqué par gaufrage sur le document de valeur (1), sans joint, et de manière à s'étendre au moins au-delà du bord de la feuille (2).

4. Dispositif selon la revendication 1 à 3, caractérisé en ce que le profil de sécurité (3) est formé par gaufrage sur la feuille (2) sans joint, de manière à s'étendre au-delà du bord d'au moins l'une des caractéristiques de sécurité (4).

5. Dispositif selon l'une des revendications 1 à 4, caractérisé en ce que le profil de sécurité (3) possède des lignes de gaufrage en renfoncement.

6. Dispositif selon l'une des revendications 1 à 5, caractérisé en ce que le profil de sécurité (3) possède des lignes de gaufrage en relief.

7. Dispositif selon l'une des revendications 1 à 6, caractérisé en ce que des parties en creux de la microstructure de la caractéristique de sécurité (4), qui deviennent actives en réalisant une diffraction optique, sont présentes directement à côté de parties du profil de sécurité (3), qui deviennent actives en tant que sommets.

8. Dispositif selon l'une des revendications 1 à 7, caractérisé en ce que le profil de sécurité (3) est une impression sans application d'encre.

9. Dispositif selon l'une des revendications 1 à 7, caractérisé en ce que le profil de sécurité (3) est au moins partiellement une impression avec application d'encre.
